# FASCICULE DE BREVET EUROPEEN

(11) **EP 3 379 105 B1**
(45) Date de publication et mention de la délivrance du brevet: **28.10.2020**
(21) Numéro de dépôt: 18162123.6
(22) Date de dépôt: 15.03.2018
(51) Int. Cl.: F16H 55/10, F16H 57/04, B64C 25/40

(54) **ÉLÉMENT D'ENGRENAGE À ROULEAUX**
ZAHNRADGETRIEBEELEMENT MIT ROLLEN
A ROLLER GEARING ELEMENT

(30) Priorité: 22.03.2017 FR 1752380
(43) Date de publication de la demande: 26.09.2018
(73) Titulaire: Safran Landing Systems, 78140 Vélizy-Villacoublay (FR)
(72) Inventeur: ELUARD, Gilles, 78140 Vélizy-Villacoublay (FR); LAMBRE, Stéphane, 78140 Vélizy-Villacoublay (FR)
(74) Mandataire: Lavialle, Bruno François Stéphane

(56) Documents cités:
- WO-A1-2015/140519

## Description

La présente invention concerne un élément d'engrenage, notamment bien que non exclusivement d'une roue motorisée d'un aéronef.

### ARRIERE-PLAN TECHNOLOGIQUE DE L'INVENTION

Dans le domaine de l'aviation, il est désormais prévu d'équiper les aéronefs d'organes d'entrainement en rotation des roues pour permettre le déplacement au sol de l'aéronef sans utiliser ses groupes motopropulseurs. En général, ces organes d'entrainement comportent un moteur électrique relié à un réducteur dont la sortie est équipée d'un pignon. Le pignon coopère avec une couronne dentée solidaire de la roue d'aéronef. De cette manière, le moteur électrique entraine en rotation le pignon, qui entraine à son tour la couronne dentée et donc la roue pour déplacer l'aéronef.

Bien évidemment, ce genre d'entrainement nécessite l'utilisation d'un moteur électrique particulièrement coupleux. L'engrenage formé par le pignon et la couronne dentée doit alors être effectué sans glissement et présenter un jeu le plus faible possible pour résister au couple du moteur, notamment lors du démarrage où le couple est délivré relativement brutalement.

Un tel type d'engrènement est rendu possible via l'utilisation d'un pignon à rouleaux, notamment proposé par la société NEXEN sous la dénomination RPS (abréviation de "Roller Pinion System").

Ce type de pignon comporte une pluralité de rouleaux destinés à coopérer avec les dents d'une roue dentée ou d'une crémaillère. Les rouleaux sont alors montés sur roulement de manière à ne créer aucun glissement avec les dents de l'élément d'engrenage voisin. A tout moment, deux rouleaux sont en contact avec une même dent de l'élément d'engrenage voisin, ce qui permet une transmission sans jeu avec un très haut rendement.

Dans le cas de la motorisation d'une roue d'aéronef, l'environnement de fonctionnement d'un tel organe d'entrainement est particulièrement contraignant. La roue d'un aéronef est en effet soumise à des niveaux de températures élevés, notamment lors des phases de freinage pendant l'atterrissage où se crée un flux de convection thermique naturelle entre le système de freinage et la roue. La roue est également exposée à des chocs avec des éléments externes (cailloux, grains, ...) projetés à grande vitesse et à des aspersions par l'eau présente sur la piste. Le risque d'endommagement ou d'usure prématurée des rouleaux du pignon est alors important.

De par sa conception, le remplacement d'un rouleau d'un pignon RPS nécessite le démontage complet du pignon, entrainant ainsi des temps et donc des coûts de maintenance non négligeables.

WO 2015/140519 A1 divulgue un ensemble d'engrenage selon le préambule de la revendication 1.

### OBJET DE L'INVENTION

L'invention a donc pour objet de proposer un élément d'engrenage dont le remplacement d'un rouleau est facilité.

### PRESENTATION DE L'INVENTION

En vue de la réalisation de cet objet, l'invention propose un élément d'engrenage comprenant un support sur lequel sont montés une pluralité d'obstacles destinés à coopérer avec des dents d'un élément d'engrenage voisin.

Selon l'invention, chacun des obstacles comprend un axe sur lequel est monté mobile en rotation au moins un rouleau via des moyens de guidage en rotation.

Chaque obstacle comprend également des moyens de blocage conformés pour sensiblement immobiliser en translation le rouleau le long de l'axe, et des moyens de fixation au support d'au moins un des moyens de blocage.

Les obstacles peuvent ainsi être démontés indépendamment les uns des autres du support de l'élément d'engrenage. De cette manière, lorsqu'un rouleau est endommagé ou usé au point de remettre en cause le bon fonctionnement de l'engrenage, seul l'obstacle comprenant le rouleau incriminé est démonté. Le temps et donc les coûts de maintenance sont alors diminués.

Selon un mode de réalisation préféré de l'invention, le support comprend un noyau central ayant des extrémités portant des flasques latéraux pourvus d'ouvertures en regards recevant chacune une portion des moyens de blocage latéraux d'un des obstacles.

De manière particulière, chaque obstacle comprend deux rouleaux avec un espace axial entre eux pour découvrir une portion des moyens de blocage et le support comprend un flasque intermédiaire pourvu d'ouvertures, les dites ouvertures étant en regard des ouvertures des flasques latéraux et recevant chacune ladite portion des moyens de blocage des rouleaux de chacun des obstacles.

Selon une caractéristique particulière de l'invention, les moyens de guidage en rotation d'au moins un des obstacles comprennent au moins un roulement.

De manière particulière, le roulement est un roulement à aiguilles.

Selon une autre caractéristique particulière de l'invention, au moins un des moyens de blocage d'au moins un des obstacles comprend un écrou et une bague de blocage centrée sur l'axe. L'écrou est alors vissé à une extrémité filetée de l'axe pour maintenir plaquée la bague de blocage contre un épaulement de l'axe.

De manière particulière, les moyens de blocage d'au moins un des obstacles sont conformés pour recevoir des joints dynamiques agencés pour assurer une étanchéité entre le rouleau et l'axe de l'obstacle.

Selon un autre mode de réalisation de l'invention, au moins un des obstacles comprend des moyens de lubrification des moyens de guidage en rotation.

De manière particulière, les moyens de lubrification comprennent au moins un canal qui s'étend à l'intérieur de l'axe et se prolonge dans un des moyens de blocage agencé pour recevoir un graisseur. Le canal communique alors avec les moyens de guidage en rotation.

De manière particulière, les moyens de fixation d'au moins un des obstacles comprennent des vis ayant un corps traversant un des moyens de blocage latéraux et une partie filetée vissée dans le support.

### DESCRIPTION DES FIGURES

L'invention sera mieux comprise à la lumière de la description qui suit, laquelle est purement illustrative et non limitative, et doit être lue en regard des figures annexées parmi lesquelles :
- la figure 1 est une vue en perspective d'un élément d'engrenage selon un mode de réalisation particulier de l'invention dont des obstacles coopèrent avec des dents d'une couronne dentée,
- la figure 2 est une vue d'un des obstacles de l'élément d'engrenage illustré à la figure 1, en coupe par un plan passant par l'axe de rotation de l'élément d'engrenage et l'axe longitudinal de l'obstacle.

### DESCRIPTION DETAILLEE D'UN MODE DE REALISATION PARTICULIER DE L'INVENTION

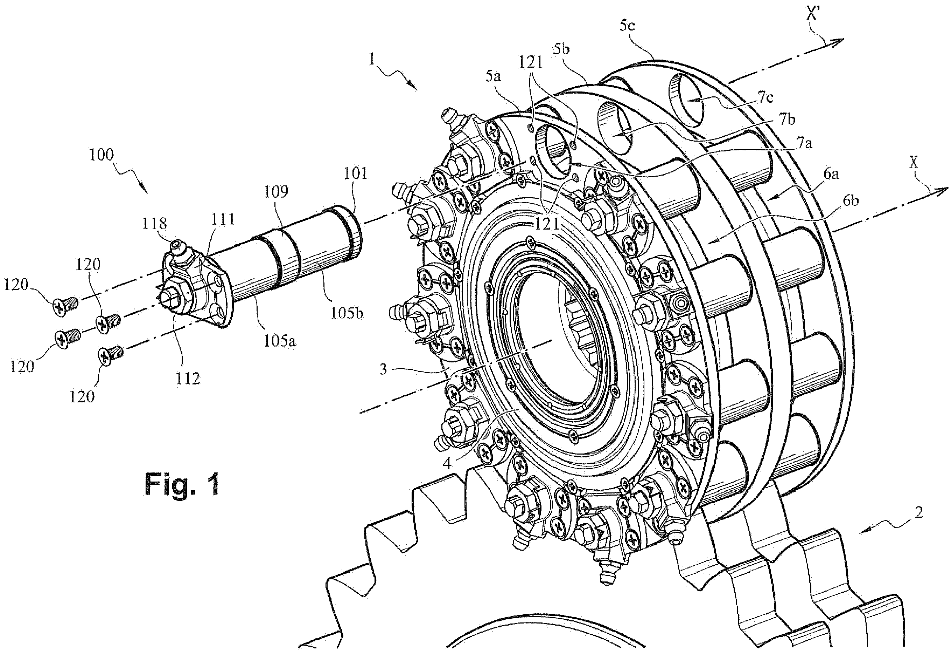

En référence à la figure 1, un élément d'engrenage 1 selon un mode de réalisation particulier de l'invention est en contact avec une couronne dentée 2 comportant une double rangée de dents. L'élément d'engrenage 1 a un axe de rotation X parallèle à un axe de rotation de la couronne dentée 2.

L'élément d'engrenage 1 comporte un support 3 sur lequel sont montés une pluralité d'obstacles 100 identiques et symétriquement répartis autour de l'axe de rotation X.

Le support 3 comporte un noyau central 4 dont la forme est assimilable à celle d'un tube droit dont l'axe longitudinal est confondu avec l'axe X de rotation de l'élément d'engrenage 1.

Le support 3 comporte également un premier flasque latéral 5a, un deuxième flasque latéral 5c et un flasque intermédiaire 5b, tous portés par le noyau central 4 du support 3. Les flasques latéraux 5a, 5c sont portés par les extrémités du noyau central 4, le flasque intermédiaire 5b étant quant à lui disposé au milieu des deux flasques latéraux 5a, 5c. La forme générale des flasques latéraux 5a, 5c et celle du flasque intermédiaire 5b sont en forme d'anneau circulaire plat d'axe central confondu avec l'axe de rotation X. Les flasques 5a, 5b, 5c ont des diamètres identiques qui sont supérieurs au diamètre du noyau central 4. L'épaisseur du flasque intermédiaire 5b est sensiblement deux fois plus importante que celle des premier et deuxième flasques latéraux 5a, 5c. Les flasques 5a, 5b, 5c s'étendent en saillie latérale du noyau central 4 de sorte que les flasques 5a, 5b, 5c forment une première gorge 6a et une deuxième gorge 6b de largeur identique et dont le fond est formé par la surface externe du noyau central 4.

Le premier flasque latéral 5a comporte des ouvertures 7a identiques et symétriquement réparties autour de l'axe de rotation X au voisinage du pourtour externe du premier flasque latéral 5a. Chacune des ouvertures 7a est de forme cylindrique d'axe parallèle à l'axe de rotation X. Ainsi, les centres des ouvertures 7a s'inscrivent sur un même cercle dont le centre est celui du premier flasque latéral 5a, centre qui est situé sur l'axe de rotation X.

Le deuxième flasque latéral 5c et le flasque intermédiaire 5b comportent respectivement des ouvertures 7c et 7b en regard des ouvertures 7a du premier flasque latéral 5a. Les ouvertures 7b et 7c sont de forme et de taille identiques aux ouvertures 7a. Ainsi, les ouvertures 7b, 7c sont de forme cylindrique et sont symétriquement réparties autour de l'axe de rotation X au voisinage du pourtour externe du flasque intermédiaire 7b et du deuxième flasque latéral 5c. De la même manière, les centres des ouvertures 7b, 7c s'inscrivent sur un même cercle dont le centre est celui du flasque intermédiaire 5b et du flasque latéral 5c respectivement.

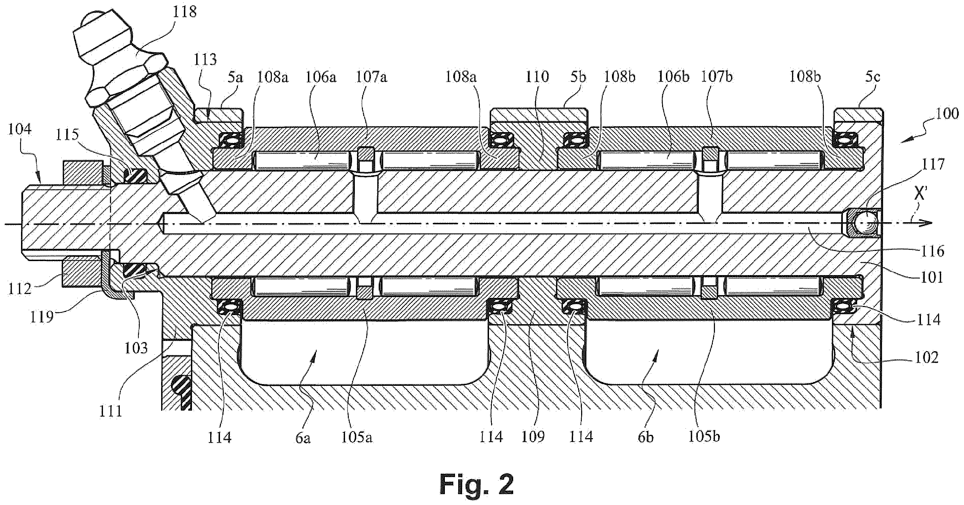

En référence à la figure 2, chaque obstacle 100 comporte un axe 101 ayant un tronçon principale dont une extrémité est pourvue d'une collerette en saillie définissant un premier épaulement 102 et l'autre extrémité est munie d'une portion filetée 104 de plus faible diamètre se raccordant au tronçon central par un deuxième épaulement 103. La longueur et le diamètre de la collerette définissant le premier épaulement 102 sont respectivement sensiblement similaires à l'épaisseur et au diamètre des ouvertures 7c du flasque latéral 5c.

Un premier rouleau 105a et un deuxième rouleau 105b identique au premier rouleau 105a sont montés mobiles en rotation autour de l'axe 101 via respectivement un premier roulement 106a et un deuxième roulement 106b identique au premier roulement 106a. Les premier et deuxième roulements 106a, 106b sont ici des roulements à aiguilles à double rangées d'aiguilles de tailles identiques.

Les premier et deuxième rouleaux 105a, 105b comportent des portions tubulaires centrales 107a, 107b et des portions tubulaires d'extrémité 108a, 108b identiques s'étendant le long de l'axe 101. Les dimensions des portions tubulaires centrales 107a, 107b sont supérieures à celles des portions tubulaires d'extrémités 108a, 108b, de sorte que les premier et deuxième rouleaux 105a, 105b jouent finalement le rôle de bagues extérieures pour les premier et deuxième roulements 106a, 106b. Le diamètre extérieur des portions tubulaires centrales 107a, 107b est toutefois inférieur à celui du premier épaulement 102.

Les premier et deuxième rouleaux 105a, 105b sont séparés par un palier de blocage intermédiaire 109 de forme annulaire centré sur l'axe 101. La longueur et le diamètre extérieur du palier de blocage intermédiaire 109 sont respectivement sensiblement similaires à l'épaisseur et au diamètre des ouvertures 7b du flasque intermédiaire 5b. Par conséquent, la longueur du palier de blocage intermédiaire 109 est sensiblement deux fois plus importante que celle du premier épaulement 102.

Le palier de blocage intermédiaire 109 est muni à l'intérieur d'un épaulement 110 de diamètre sensiblement égal à celui de l'axe 101 et conformé pour recevoir d'un côté une des portions tubulaires d'extrémités 108a du premier rouleau 105a et de l'autre côté une des portions tubulaires d'extrémité 108b du deuxième rouleau 105b. Les portions tubulaires d'extrémités 108a et 108b étant de dimensions similaires, le palier de blocage intermédiaire 109 est symétrique selon un plan perpendiculaire à l'axe 101 et passant par le milieu de l'épaulement 110.

De la même manière, le premier épaulement 102 de l'axe 101 est conformé pour recevoir l'autre des portions tubulaires d'extrémité 108b du deuxième rouleau 105b. Le deuxième rouleau 105b est ainsi immobilisé en translation par le palier de blocage intermédiaire 109 et le premier épaulement 102 de l'axe 101.

Un palier de blocage latéral 111 amovible prend appui sur le deuxième épaulement 103 de l'axe 101 et est conformé, comme précédemment, pour recevoir l'autre des portions tubulaires d'extrémité 108a du premier rouleau 105a. Le premier rouleau 105a est ainsi immobilisé en translation par le palier de blocage intermédiaire 109 et le palier de blocage latéral 111. Le palier de blocage latéral 111 est ici maintenu en position contre le deuxième épaulement 103 via un écrou 112 vissé sur la portion filetée 104.

L'extrémité du palier de blocage latéral 111 recevant une portion tubulaire d'extrémité 108a du premier rouleau 105a comporte une portion tubulaire 113. La longueur et le diamètre extérieur de la portion tubulaire 113 sont respectivement sensiblement similaires à l'épaisseur et au diamètre des ouvertures 7a du flasque latéral 5a. Par conséquent, la longueur de la portion tubulaire 113 est sensiblement égale à celle du premier épaulement 102.

Avantageusement, le palier de blocage latéral 111, le palier de blocage 109 et le premier épaulement 102 sont conformés pour recevoir des joints dynamiques 114 de type Turcon Variseal W destinés à assurer l'étanchéité de l'obstacle 100. Les joints dynamiques 114 sont pour cela en contact avec les portions tubulaires d'extrémités 108a, 108b des premier et deuxième rouleaux 105a, 105b.

Pour la même raison, l'extrémité du palier de blocage latéral 111 est conformé pour recevoir un joint torique 115 en contact avec l'axe 101. Dès lors, la durée de vie des roulements à aiguilles, et donc des rouleaux, est ainsi allongée.

L'axe 101 comprend un canal 116 qui s'étend intérieurement le long de l'axe longitudinal X' de l'axe 101. Le canal 116 communique avec les premier et deuxième roulements 106a, 106b entre les deux rangées d'aiguilles. Une extrémité du canal 116 débouche à l'extrémité de l'axe 101 comprenant le premier épaulement 102. Ladite extrémité du canal 116 est obstruée par un bouchon étanche 117 de type Koenig. Le canal 116 se prolonge dans le palier de blocage latéral 111 qui est conformé pour recevoir un graisseur 118 comportant un clapet anti-retour. Le graisseur 118 est rapporté vissé et fixé à demeure sur le palier de blocage latéral 111. Le graisseur 118 permet ainsi de faire circuler à travers le canal 116 un lubrifiant permettant d'assurer le bon fonctionnement des roulements 106a, 106b pour garantir la libre rotation des rouleaux 105a, 105b sous charge, et cela sans démonter aucun élément de l'élément d'engrenage 1.

Le bon positionnement angulaire du palier de blocage latéral 111 est assuré par une rondelle frein à rabat 119 dont le principe ne sera pas expliqué ici car bien connu de l'homme du métier.

L'élément d'engrenage 1 illustré à la figure 1 comprend ainsi onze obstacles 100 qui sont insérés dans le support 3 suivant une translation le long de l'axe longitudinal X' de chacun des obstacles. Les ouvertures 7a, 7b, 7c des flasques 5a, 5b, 5c reçoivent respectivement la portion tubulaire 113 du palier de blocage latéral 111, le palier de blocage intermédiaire 109 et le premier épaulement 102 de l'axe 101.

Le maintien de chacun des obstacles 100 dans le support 3 est assuré par quatre vis 120. Pour cela, le corps des vis 120 traverse le palier de blocage latéral 111 suivant un axe parallèle à l'axe longitudinal X'. La partie filetée des vis 120 est vissée dans des trous taraudés 121 du flasque latéral 5a qui sont répartis autour de l'ouverture 7a. La tête des vis 120 est orientée à l'extérieur de l'élément d'engrenage 1, leur accès étant ainsi facilité.

La rotation de l'élément d'engrenage 1 autour de son axe entraine alors à son tour la rotation de la couronne dentée 2, les obstacles 100 entrant successivement en contact avec les dents de la couronne dentée 2. Les premier et deuxième rouleaux 105a, 105b de chacun des obstacles permettent en fait de coopérer sans glissement avec la double rangée de dents de la couronne dentée 2. Idéalement, les dents de la couronne dentée 2 sont conformées pour coopérer sans jeu avec les rouleaux 105a, 105b.

L'élément d'engrenage 1 et la couronne dentée 2 forment ainsi un engrenage droit classique dans lequel les rouleaux 105a, 105b tournent autour de l'axe de rotation X de l'élément d'engrenage 1 mais aussi autour de leur axe longitudinal X'.

Le palier intermédiaire 109 permet finalement de rigidifier l'axe 101 et ainsi d'empêcher le fléchissement de l'axe 101 sous les efforts d'engrènement.

Lorsqu'un des rouleaux 105a, 105b est endommagé ou usé au point de remettre en cause le bon fonctionnement de l'élément d'engrenage 1, il n'est pas forcément nécessaire de remplacer ou de démonter tout l'élément d'engrenage 1 de son dispositif pour le réparer. Il est en effet possible de remplacer uniquement l'obstacle 100 incriminé en le désolidarisant de l'élément 3, simplement en dévissant les quatre vis 120 et en effectuant une translation de l'obstacle 100 suivant son axe longitudinal X'. Les temps de maintenance sont alors fortement diminués puisqu'il n'est alors plus nécessaire de démonter tout l'élément d'engrenage 1.

Dans le cas d'une roue motorisée d'un aéronef équipée d'un élément d'engrenage 1, les rouleaux 105a, 105b sont soumis à de fortes charges qui sont notamment brutales lors du démarrage ou de l'arrêt de l'engrènement. Les risques d'endommagement et d'usure des rouleaux 105a, 105b sont alors importants. L'utilisation d'un élément d'engrenage 1 tel que décrit précédemment permet notamment de remplacer rapidement l'obstacle 100 en mauvais état par un autre obstacle 100 en parfait état de fonctionnement. Le temps d'immobilisation de l'aéronef au sol pour réparer l'élément d'engrenage 1 est alors diminué, diminuant par la même occasion les coûts de maintenance et d'exploitation de l'aéronef.

Bien entendu, l'invention n'est pas limitée au mode de réalisation décrit mais englobe toute variante entrant dans le champ de l'invention telle que définie par les revendications.

Bien que l'élément d'engrenage 1 puisse s'apparenter à un pignon au regard de la figure 2, le diamètre de l'élément d'engrenage 1 peut être supérieur à celui de la couronne dentée 2.

Bien que l'élément d'engrenage 1 coopère ici avec une couronne dentée 2, l'élément d'engrenage 1 peut par exemple coopérer avec une crémaillère.

Bien que l'obstacle 100 illustré à la figure 1 comprenne deux rouleaux, l'obstacle 100 peut comprendre un rouleau ou plus de deux rouleaux pour par exemple coopérer avec une roue dentée comprenant une seule ou plus de deux rangées de dents.

L'élément d'engrenage 1 peut notamment comporter des moyens de détrompage pour assurer le bon positionnement angulaire des obstacles 100 et notamment la coaxialité des ouvertures 7a, 7b, 7c des flasques 5a, 5b, 5c.

Bien que les diamètres des ouvertures 7a, 7b, 7c soient ici identiques, ceux-ci peuvent varier d'un flasque à l'autre à condition de ne pas entraver la possibilité de montage des obstacles sur le support de l'élément d'engrenage. Ainsi, le diamètre des ouvertures 7a peut être supérieur ou égal à celui des ouvertures 7b, le diamètre des ouvertures 7b étant alors supérieur ou égale à celui des ouvertures 7c. De la même manière, le diamètre des ouvertures 7b peut être supérieur ou égal à celui des ouvertures 7c, le diamètre des ouvertures 7a étant alors supérieur ou égale à celui des ouvertures 7b. De la même manière, le diamètre des ouvertures 7a peut être supérieur ou égal à celui des ouvertures 7c, le diamètre des ouvertures 7b étant alors supérieur ou égale à celui des ouvertures 7c et inférieur ou égal à celui des ouvertures 7a.

Bien que les diamètres des ouvertures 7a, 7b, 7c soient ici identiques d'un flasque à l'autre, le diamètre des ouvertures 7a peut être supérieur ou égal à celui des ouvertures 7b, le diamètre des ouvertures 7b étant alors supérieur ou égale à celui des ouvertures 7c. De la même manière, le diamètre des ouvertures 7b peut être supérieur ou égal à celui des ouvertures 7c, le diamètre des ouvertures 7a étant alors supérieur ou égale à celui des ouvertures 7b. La montabilité des obstacles sur le support de l'élément d'engrenage est alors toujours assuré. Ainsi, le diamètre de la portion tubulaire 113 du palier de blocage 111 peut être supérieur ou égal à celui du palier de blocage intermédiaire 109, le diamètre du palier de blocage intermédiaire 109 étant alors supérieur à celui du premier épaulement 102.

Les ouvertures 7a, 7b, 7c des flasques 5a, 5b, 5c peuvent être de forme autre que circulaire du moment qu'elles sont conformés pour correspondre avec les moyens de blocage des rouleaux 105a, 105b.

Le premier épaulement 102 de l'axe 101 peut être remplacé par un palier de blocage amovible.

Les roulements 106a, 106b peuvent être d'un type différent que celui illustrés à la figure 2, à savoir des roulements à aiguilles à double rangée d'aiguilles.

Le support peut être réalisé d'une seule pièce, par usinage, ou en plusieurs pièces. Dans ce dernier cas, les flasques sont par exemple rapportés sur le noyau central puis soudés sur celui-ci ; ou assemblés de manière démontable par exemple en prévoyant des cannelures pour l'immobilisation en rotation des flasques par rapport au noyau central et des éléments filetés/taraudés pour leur immobilisation axiale.

## Revendications

1. Elément d'engrenage (1) comprenant un support (3) sur lequel sont montés une pluralité d'obstacles (100) destinés à coopérer avec des dents d'un élément d'engrenage voisin (2), chaque obstacle comprend:
- un axe (101),
- au moins un rouleau (105a, 105b) monté mobile en rotation autour de l'axe via des moyens de guidage en rotation (106a, 106b),
**caractérisé en ce que** l'obstacle comprend de plus:
- des moyens de blocage (102, 109, 111) conformés pour sensiblement immobiliser en translation le rouleau le long de l'axe,
- des moyens de fixation (120) au support d'au moins un des moyens de blocage.

2. Elément d'engrenage selon la revendication 1, dans lequel le support (3) comprend un noyau central (4) ayant des extrémités portant des flasques latéraux (5a, 5c) pourvus d'ouvertures (7a, 7c) en regard recevant chacune une portion des moyens de blocage latéraux (102, 111) d'un des obstacles (100).

3. Elément d'engrenage selon la revendication 2, dans lequel chaque obstacle (100) comprend deux rouleaux (105a, 105b) avec entre eux un espace axial pour découvrir une portion des moyens de blocage et le support comprend un flasque intermédiaire (5b) pourvu d'ouvertures (7b), les dites ouvertures étant en regard des ouvertures des flasques latéraux (7a, 7c) et recevant chacune ladite portion des moyens de blocage des rouleaux de chacun des obstacles.

4. Elément d'engrenage selon l'une quelconque des revendications précédentes, dans lequel les moyens de guidage en rotation d'au moins un des obstacles comprennent au moins un roulement (106a, 106b).

5. Elément d'engrenage selon la revendication 4, dans lequel le roulement est un roulement à aiguilles.

6. Elément d'engrenage selon l'une quelconque des revendications précédentes, dans lequel au moins un des moyens de blocage d'au moins un des obstacles (100) comprend un écrou (112) et une bague de blocage (111) centrée sur l'axe, l'écrou étant vissé à une extrémité filetée de l'axe pour maintenir plaquée la bague de blocage contre un épaulement (103) de l'axe.

7. Elément d'engrenage selon l'une quelconque des revendications précédentes, dans lequel les moyens de blocage d'au moins un des obstacles sont conformés pour recevoir des joints dynamiques (114) agencés pour assurer une étanchéité entre le rouleau (105a, 105b) et l'axe (100) de l'obstacle.

8. Elément d'engrenage selon l'une quelconque des revendications précédentes, dans lequel au moins un des obstacles (100) comprend des moyens de lubrification 116, 117, 118) des moyens de guidage en rotation.

9. Elément d'engrenage selon la revendication 8, dans lequel les moyens de lubrification comprennent au moins un canal (116) qui s'étend à l'intérieur de l'axe (101) et se prolonge dans un des moyens de blocage (111) agencé pour recevoir un graisseur (118), le canal communiquant avec les moyens de guidage en rotation (106a, 106b).

10. Elément d'engrenage selon l'une quelconque des revendications précédentes, dans lequel les moyens de fixation d'au moins un des obstacles comprennent des vis (120) ayant un corps traversant un des moyens de blocage latéraux (111) et une partie filetée vissée dans le support (3).

## Patentansprüche

1. Getriebeelement (1) mit einem Träger (3), auf dem mehrere Hindernisse (100) angeordnet sind, die dazu bestimmt sind, mit Zähnen eines benachbarten Getriebeelements (2) zusammenzuwirken, wobei jedes Hindernis umfasst:
eine Achse (101),
mindestens eine Rolle (105a, 105b), die mit Hilfe von Drehführungseinrichtungen (106a, 106b) um die Achse drehbar gelagert ist,
**dadurch gekennzeichnet, dass** das Hindernis weiter umfasst:
Lagerelemente (102, 109, 111), die so geformt sind, dass sie eine Bewegung der Rolle entlang der Achse im Wesentlichen verhindern,
Befestigungselemente (120) zur Befestigung mindestens eines der Lagerelemente an dem Träger.

2. Getriebeelement nach Anspruch 1, bei dem der Träger (3) einen zentralen Kern (4) aufweist, dessen Enden seitliche Lagerschilde (5a, 5c) tragen, die mit gegenüberliegenden Öffnungen (7a, 7c) versehen sind, die jeweils einen Teil der seitlichen Lagerelemente (102, 111) eines der Hindernisse (100) aufnehmen.

3. Getriebeelement nach Anspruch 2, wobei jedes Hindernis (100) zwei Rollen (105a, 105b) mit einem axialen Zwischenraum zwischen ihnen aufweist, um einen Teil der Lagerelemente freizulegen, und der Träger einen Zwischenlagerschild (5b) aufweist, der mit Öffnungen (7b) versehen ist, wobei die Öffnungen den Öffnungen der Lagerschilde (7a, 7c) gegenüberliegen und jeweils den Teil der Lagerelemente der Rollen jedes der Hindernisse aufnehmen.

4. Getriebeelement nach einem der vorstehenden Ansprüche, wobei die Drehführungseinrichtungen mindestens eines der Hindernisse mindestens ein Lager (106a, 106b) umfassen.

5. Getriebeelement nach Anspruch 4, wobei das Lager ein Nadellager ist.

6. Getriebeelement nach einem der vorstehenden Ansprüche, wobei mindestens eines der Lagerelemente mindestens eines der Hindernisse (100) eine Mutter (112) und eine auf die Achse zentrierten Sperrkante (111) aufweist, wobei die Mutter auf ein Gewindeende der Achse geschraubt ist, um die Sperrkante gegen einen Anschlag (103) der Achse gedrückt zu halten.

7. Getriebeelement nach einem der vorstehenden Ansprüche, wobei die Lagerelemente mindestens eines der Hindernisse so geformt sind, dass sie dynamische Dichtungen (114) aufnehmen, die so angeordnet sind, dass sie eine Abdichtung zwischen der Rolle (105a, 105b) und der Achse (100) des Hindernisses bilden.

8. Getriebeelement nach einem der vorstehenden Ansprüche, wobei mindestens eines der Hindernisse (100) Mittel (116, 117, 118) zur Schmierung der Drehführungseinrichtungen aufweist.

9. Getriebeelement nach Anspruch 8, bei dem die Mittel zur Schmierung mindestens einen Kanal (116) aufweisen, der sich im Inneren der Achse (101) erstreckt und sich in eines der Lagerelemente (111) erstreckt und zur Aufnahme eines Schmierstoffes (118) eingerichtet ist, wobei der Kanal mit den Drehführungsmitteln (106a, 106b) in Verbindung steht.

10. Getriebeelement nach einem der vorstehenden Ansprüche, wobei die Befestigungselemente mindestens eines der Hindernisse Schrauben (120) umfassen, die einen Körper aufweisen, der durch eines der seitlichen Lagerelemente (111) hindurchgeht, und einen in den Träger (3) eingeschraubten Gewindeteil aufweisen.

## Claims

1. A gearing element (1) comprising a support (3) having mounted thereon a plurality of obstacles for co-operating with teeth of a neighboring gearing element (2), each obstacle comprising:
- a pin (101);
- at least one roller (105a, 105b) mounted to rotate about the pin via rotary guide means (106a, 106b); **characterized in that** the obstacle further comprises:
- blocking means (102, 109, 111) shaped substantially to prevent the roller from moving in translation along the pin; and
- fastener means (120) for fastening at least one of the blocking means to the support.

2. A gearing element according to claim 1, wherein the support (3) comprises a central core (4) having ends carrying end plates (5a, 5c) provided with facing openings (7a, 7c), each receiving a portion of the means (102, 111) for blocking one of the obstacles (100).

3. A gearing element according to claim 2, wherein each obstacle (100) comprises two rollers (105a, 105b) with an axial space between them in order to uncover a portion of the blocking means, and the support has an intermediate plate (5b) provided with openings (7b), said openings facing openings in the end plates (7a, 7c) and each receiving said portion of the means for blocking the rollers of each of the obstacles.

4. A gearing element according to any preceding claim, wherein the means for guiding rotation of at least one of the obstacles comprise at least one rolling bearing (106a, 106b).

5. A gearing element according to claim 4, wherein the rolling bearing is a needle bearing.

6. A gearing element according to any preceding claim, wherein at least one of the means for blocking at least one of the obstacles (100) comprises a nut (112) and a blocking neck (111) centered on the axis, the nut being screwed onto a threaded end of the pin in order to hold the blocking neck pressed against a shoulder (103) of the pin.

7. A gearing element according to any preceding claim, wherein the means for blocking at least one of the obstacles are shaped to receive dynamic gaskets (114) arranged to provide sealing between the roller (105, 105b) and the pin (100) of the obstacle.

8. A gearing element according to any preceding claim, wherein at least one of the obstacles (100) includes lubrication means (116, 117, 118) for lubricating the means for guiding rotation.

9. A gearing element according to claim 8, wherein the lubrication means comprise at least one channel (116) extending inside the pin (101) and penetrating into one of the blocking means (111) arranged to receive a grease fitting (118), the channel communicating with the rotary guide means (106a, 106b).

10. A gearing element according to any preceding claim, wherein the means for fastening at least one of the obstacles comprise screws (120), each having a shank passing through one of the end blocking means (111) and a threaded portion screwed into the support (3).
